# EUROPEAN PATENT APPLICATION

(11) **EP 4 786 736 A1**
(43) Date of publication of application: **05.08.2026**
(21) Application number: 26154207.0
(22) Date of filing: 26.01.2026
(51) Int. Cl.: F01D 9/04, B64D 33/02, F01D 25/04, F02C 7/045, F02K 1/82, F02K 3/06, F01D 25/24

(54) **AIRCRAFT PROPULSION SYSTEM WITH ACOUSTIC TREATMENT ALONG BYPASS FLOWPATH**

(30) Priority: 26.01.2025 US 202519037229
(71) Applicant: RTX Corporation, Farmington, CT 06032 (US)
(72) Inventor: YAZICI, Murat, Glastonbury, 06033 (US); ALI, Amr A., South Windsor, 06074 (US)
(74) Representative: Dehns

(57) **Abstract**

An apparatus is provided for an aircraft propulsion system (20). This apparatus includes an inner housing structure (72) extending axially along and circumferentially about an axis (22). A radial outer side of the inner housing structure (72) forms an inner peripheral boundary (84) of a flowpath (70). The inner housing structure (72) includes an inner case (86), an inner platform (88) of a guide vane structure (80), a flowpath wall (90) and a bulkhead (92). The flowpath wall (90) is axially adjacent the inner platform (88) along the inner peripheral boundary (84) of the flowpath (70). The flowpath wall (90) is spaced radially outboard from the inner case (86). The flowpath wall (90) is configured with a flowpath wall acoustic treatment (136C) extending along the inner peripheral boundary (84) of the flowpath (70). The bulkhead (92) extends radially between and is connected to the inner case (86) and the flowpath wall (90).

## Description

### BACKGROUND OF THE DISCLOSURE

### 1. Technical Field

This disclosure relates generally to an aircraft and, more particularly, to a propulsion system for the aircraft.

### 2. Background Information

Various types of propulsion systems for an aircraft are known in the art, including turbofan propulsion systems. Various types and arrangements of acoustic treatment for an aircraft propulsion system are also known in the art. While these known aircraft propulsion systems and acoustic treatment have various benefits, there is still room in the art for improvement.

### SUMMARY OF THE DISCLOSURE

According to an aspect of the present invention, an apparatus is provided for an aircraft propulsion system. This apparatus includes an inner housing structure extending axially along and circumferentially about an axis. A radial outer side of the inner housing structure forms an inner peripheral boundary of a flowpath. The inner housing structure includes an inner case, an inner platform of a guide vane structure, a flowpath wall and a bulkhead. The flowpath wall is axially adjacent the inner platform along the inner peripheral boundary of the flowpath. The flowpath wall is spaced radially outboard from the inner case. The flowpath wall is configured with a flowpath wall acoustic treatment extending along the inner peripheral boundary of the flowpath. The bulkhead extends radially between and is connected to the inner case and the flowpath wall.

According to another aspect of the present invention, an aircraft propulsion system is provided that includes a fan rotor, an engine core, an inner housing structure, an outer housing structure and a plurality of vanes. The engine core is configured to drive rotation of the fan rotor about an axis. The inner housing structure houses the engine core. A radial outer side of the inner housing structure forms an inner peripheral boundary of a bypass flowpath. The inner housing structure includes an inner platform, a flowpath wall and an inner nacelle structure. The flowpath wall is axially adjacent and between the inner platform and a cowl of the inner nacelle structure along the inner peripheral boundary of the bypass flowpath. The flowpath wall is configured with a flowpath wall acoustic treatment extending along the inner peripheral boundary of the bypass flowpath. The outer housing structure is spaced radially outboard from the inner housing structure. A radial inner side of the outer housing structure forms an outer peripheral boundary of the bypass flowpath. The vanes are arranged circumferentially about the inner platform. Each of the vanes projects radially across the bypass flowpath from the inner platform to the outer housing structure.

According to still another aspect of the present invention, another aircraft propulsion system is provided that includes a fan rotor, an engine core, an inner housing structure, an outer housing structure and a plurality of vanes. The engine core is configured to drive rotation of the fan rotor about an axis. The engine core includes a core flowpath. The inner housing structure houses the engine core. A radial outer side of the inner housing structure forms an inner peripheral boundary of a bypass flowpath. The inner housing structure includes a splitter structure and an inner platform. A leading edge of the splitter structure is radially between and partially forms an inlet into the core flowpath and an inlet into the bypass flowpath. An outer wall of the splitter structure is axially next to the inner platform along the inner peripheral boundary of the bypass flowpath. The outer wall of the splitter structure is configured with a splitter structure acoustic treatment extending along the inner peripheral boundary of the bypass flowpath. The outer housing structure is spaced radially outboard from the inner housing structure. A radial inner side of the outer housing structure forms an outer peripheral boundary of the bypass flowpath. The vanes are arranged circumferentially about the inner platform. Each of the vanes projects radially across the bypass flowpath from the inner platform to the outer housing structure.

In an embodiment of the above, the inner housing structure may also include a flowpath wall and an inner nacelle structure. The flowpath wall may be axially adjacent and between the inner platform and a cowl of the inner nacelle structure along the inner peripheral boundary of the bypass flowpath. The flowpath wall may be configured with a flowpath wall acoustic treatment extending along the inner peripheral boundary of the bypass flowpath.

In an embodiment according to any of the previous embodiments, the apparatus may also include an outer housing structure. The outer housing structure may be spaced radially outboard from, extend axially along and extend circumferentially about the inner housing structure. A radial inner side of the outer housing structure may form an outer peripheral boundary of the flowpath. The outer housing structure may include an outer case. A plurality of vanes of the guide vane structure may be arranged circumferentially about the axis in an array. Each of the vanes may project radially across the flowpath from the inner platform to the outer case.

In an embodiment according to any of the previous embodiments, the vanes may include a first vane. The first vane may be canted and project axially over the flowpath wall acoustic treatment as the first vane extends radially outward towards the outer case.

In an embodiment according to any of the previous embodiments, the vanes may include a first vane. The first vane may be configured with a vane acoustic treatment extending at least partially radially along the first vane.

In an embodiment according to any of the previous embodiments, the inner platform may be configured with an inner platform acoustic treatment extending along the inner peripheral boundary of the flowpath.

In an embodiment according to any of the previous embodiments, at least a portion of the inner platform acoustic treatment may be disposed between a circumferentially neighboring pair of the vanes.

In an embodiment according to any of the previous embodiments, the apparatus may also include a fan rotor and an engine core configured to drive rotation of the fan rotor. The inner housing structure may house the engine core. The outer case may be radially next to and circumscribe the fan rotor. The vanes may be downstream of the fan rotor.

In an embodiment according to any of the previous embodiments, the inner housing structure may also include an inner nacelle structure. The flowpath wall may extend axially between a downstream end of the inner platform and an upstream end of a cowl of the inner nacelle structure.

In an embodiment according to any of the previous embodiments, the cowl of the inner nacelle structure may interface with the flowpath wall at a v-groove coupling.

In an embodiment according to any of the previous embodiments, the cowl of the inner nacelle structure may be configured with a cowl acoustic treatment extending along the inner peripheral boundary of the flowpath.

In an embodiment according to any of the previous embodiments, the inner housing structure may also include a splitter structure. An outer wall of the splitter structure may extend axially from a leading edge of the splitter structure to an upstream end of the inner platform.

In an embodiment according to any of the previous embodiments, the outer wall of the splitter structure may be configured with a splitter structure acoustic treatment extending along the inner peripheral boundary of the flowpath.

In an embodiment according to any of the previous embodiments, the apparatus may also include a bifurcation structure projecting radially out from the inner housing structure across the flowpath. The bifurcation structure may include a nose structure forming a leading edge of the bifurcation structure. The nose structure may be connected to and may axially overlap a downstream end portion of the flowpath wall.

In an embodiment according to any of the previous embodiments, the bulkhead may be configured as or otherwise include a firewall.

In an embodiment according to any of the previous embodiments, the flowpath wall acoustic treatment may be configured as or otherwise include an acoustic panel with a cellular core.

In an embodiment according to any of the previous embodiments, the flowpath wall acoustic treatment may be configured as or otherwise include a single degree-of-freedom acoustic treatment.

In an embodiment according to any of the previous embodiments, the flowpath wall acoustic treatment may be configured as or otherwise include a multi degree-of-freedom acoustic treatment.

The present disclosure may include any one or more of the individual features disclosed above and/or below alone or in any combination thereof.

The foregoing features and the operation of the invention will become more apparent in light of the following description and the accompanying drawings.

### BRIEF DESCRIPTION OF THE DRAWINGS

FIG. 1 is a schematic illustration of a propulsion system for an aircraft.
FIG. 2 is a schematic illustration of a portion of the propulsion system at a fan section.
FIG. 3 is a sectional illustration of a portion of an inner housing structure at a mechanical coupling.
FIG. 4 is a schematic cross-sectional illustration of a portion of the propulsion system at a guide vane structure.
FIG. 5 is a schematic sectional illustration of a portion of a component configured with a single degree-of-freedom acoustic treatment.
FIGS. 6A and 6B are plan view illustrations of a portion of a cellular core with various sidewall arrangements.
FIG. 7 is a schematic sectional illustration of a portion of the component and the acoustic treatment of FIG. 5 during sound attenuation.
FIG. 8 is a schematic sectional illustration of a portion of the component configured with a double degree-of-freedom acoustic treatment.
FIG. 9 is a schematic cross-sectional illustration of a portion of the component with the acoustic treatment.

### DETAILED DESCRIPTION

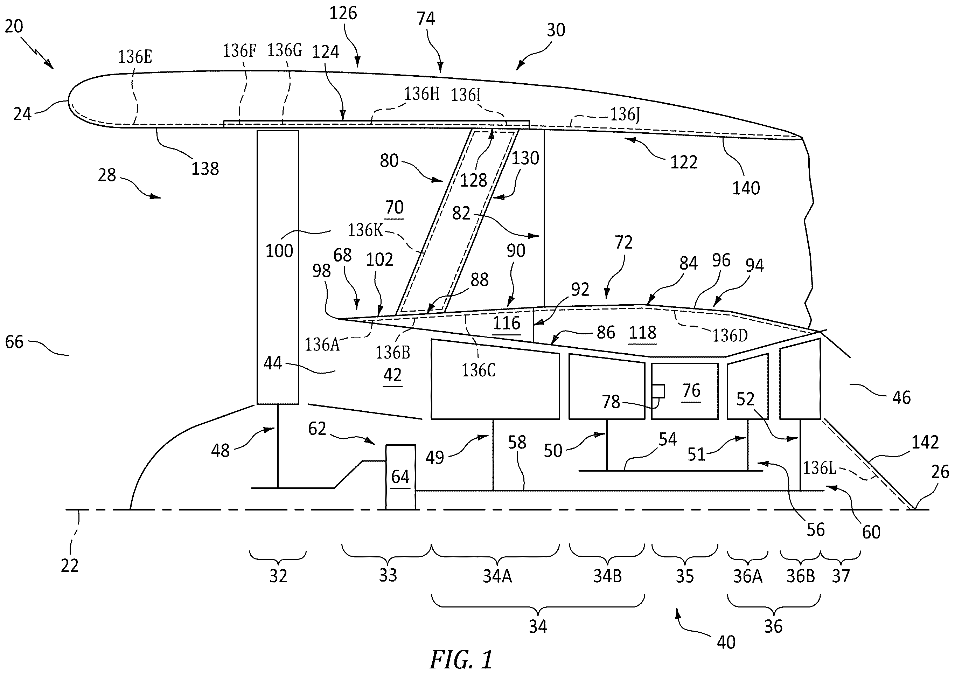

FIG. 1 illustrates a propulsion system 20 for an aircraft. The aircraft may be an airplane, a drone (e.g., an unmanned aerial vehicle (UAV)) or any other manned or unmanned aerial vehicle or system. The aircraft propulsion system 20 extends axially along an axis 22 between an upstream, forward end 24 of the aircraft propulsion system 20 and a downstream, aft end 26 of the aircraft propulsion system 20. The propulsion system axis 22 may be a centerline axis of the aircraft propulsion system 20 and/or a centerline axis of one or more members of the aircraft propulsion system 20. The propulsion system axis 22 may also or alternatively be a rotational axis of one or more rotating members of the aircraft propulsion system 20.

The aircraft propulsion system 20 may be configured as a turbofan propulsion system. The aircraft propulsion system 20 of FIG. 1 includes a gas turbine engine 28 (e.g., a turbofan engine) housed within a stationary propulsion system housing 30.

The turbine engine 28 may be configured as a turbofan engine. The turbine engine 28 of FIG. 1 includes a fan section 32, an inlet section 33, a compressor section 34, a combustor section 35, a turbine section 36 and an exhaust section 37. The compressor section 34 of FIG. 1 includes a low pressure compressor (LPC) section 34A and a high pressure compressor (HPC) section 34B. The turbine section 36 of FIG. 1 includes a high pressure turbine (HPT) section 36A and a low pressure turbine (LPT) section 36B. At least (or only) the LPC section 34A, the HPC section 34B, the combustor section 35, the HPT section 36A and the LPT section 36B collectively form a core 40 of the turbine engine 28. The turbine engine 28 and its engine core 40 include a core flowpath 42 (e.g., an annular core flowpath) which extends longitudinally within the turbine engine 28 from an airflow inlet 44 into the core flowpath 42 to a combustion products exhaust 46 from the core flowpath 42. More particularly, the core flowpath 42 extends sequentially through the inlet section 33, the LPC section 34A, the HPC section 34B, combustor section 35, the HPT section 36A, the LPT section 36B and the exhaust section 37 from the core inlet 44 to the core exhaust 46.

The fan section 32 includes a bladed fan rotor 48. The LPC section 34A includes a bladed low pressure compressor (LPC) rotor 49. The HPC rotor 50 includes a bladed high pressure compressor (HPC) rotor 50. The HPT section 36A includes a bladed high pressure turbine (HPT) rotor 51. The LPT section 36B includes a bladed low pressure turbine (LPT) rotor 52. Each of these engine rotors 48-52 includes a rotor base (e.g., a disk or a hub) and a plurality of rotor blades (e.g., airfoils, vanes, etc.). The rotor blades are arranged and may be equispaced circumferentially around the respective rotor base in an array. Each of the rotor blades is connected to the respective rotor base. Each of the rotor blades projects radially (e.g., spanwise) out from the respective rotor base to a distal tip of the respective rotor blade. The rotor blades of the engine rotors 49-52 may also be arranged into one or more stages longitudinally along the core flowpath 42.

The HPC rotor 50 is coupled to and rotatable with the HPT rotor 51. The HPC rotor 50 of FIG. 1, for example, is connected to the HPT rotor 51 through a high speed shaft 54. At least (or only) the HPC rotor 50, the HPT rotor 51 and the high speed shaft 54 collectively form a high speed rotating structure 56; e.g., a high speed spool of the turbine engine 28 and its engine core 40. This high speed rotating structure 56 of FIG. 1 and its members 50, 51 and 54 are rotatable about the propulsion system axis 22. However, it is contemplated the high speed rotating structure 56 may alternatively be rotatable about another axis radially and/or angularly offset from the rotational axis of the fan rotor 48 and/or the centerline axis of the turbine engine 28.

The LPC rotor 49 is coupled to and rotatable with the LPT rotor 52. The LPC rotor 49 of FIG. 1, for example, is connected to the LPT rotor 52 by a low speed shaft 58. At least (or only) the LPC rotor 49, the LPT rotor 52 and the low speed shaft 58 collectively form a low speed rotating structure 60; e.g., a low speed spool of the turbine engine 28 and its engine core 40. This low speed rotating structure 60 of FIG. 1 and its members 49, 52 and 58 are rotatable about the propulsion system axis 22. However, it is contemplated the low speed rotating structure 60 may alternatively be rotatable about another axis radially and/or angularly offset from the rotational axis of the fan rotor 48 and/or the centerline axis of the turbine engine 28.

The low speed rotating structure 60 is coupled to the fan rotor 48 through a drivetrain 62. This drivetrain 62 may be configured as a geared drivetrain, where a geartrain 64 (e.g., a transmission, a speed change device, an epicyclic geartrain, etc.) is disposed between and operatively couples the fan rotor 48 to the low speed rotating structure 60 and its LPT rotor 52. With this arrangement, the fan rotor 48 may rotate at a different (e.g., slower) rotational speed than the low speed rotating structure 60 and its LPT rotor 52. Here, the fan rotor 48 and the low speed rotating structure 60 may rotate in a common (the same) direction about the propulsion system axis 22, or in opposite directions, about the propulsion system axis 22 depending, for example, upon the specific configuration of the geartrain 64. Alternatively, the drivetrain 62 may be configured as a direct-drive drivetrain, where the geartrain 64 is omitted. With such an arrangement, the fan rotor 48 rotates at a common (the same) rotational speed as the low speed rotating structure 60 and its LPT rotor 52.

During turbine engine operation, ambient air from outside of the aircraft enters the aircraft propulsion system 20 and its turbine engine 28 through an airflow inlet 66. This air is directed across the fan section 32 and its fan rotor 48 and is subsequently split into a radial inner stream of air and a radial outer stream of air by a splitter structure 68 of the propulsion system housing 30. The inner air stream is directed into the core flowpath 42. This air entering the core flowpath 42 may be referred to as "core air". The outer air stream is directed into a bypass flowpath 70; e.g., an annular bypass flowpath. This bypass flowpath 70 extends through a bypass duct formed by an inner housing structure 72 and an outer housing structure 74, where the bypass flowpath 70 and its bypass duct bypass (e.g., are disposed radially outboard of and extend along an exterior of) the engine core 40 and the inner housing structure 72. The air entering the bypass flowpath 70 may be referred to as "bypass air".

The core air is compressed by the LPC rotor 49 and the HPC rotor 50 and is directed into a combustion chamber 76 (e.g., an annular combustion chamber) of a combustor (e.g., an annular combustor) in the combustor section 35. Fuel is injected into the combustion chamber 76 by one or more fuel injectors 78 and mixed with the compressed core air to provide a fuel-air mixture. This fuel-air mixture is ignited and combustion products thereof flow through and sequentially drive rotation of the HPT rotor 51 and the LPT rotor 52. The rotation of the HPT rotor 51 and the LPT rotor 52 respectively drive rotation of the HPC rotor 50 and the LPC rotor 49 and, thus, compression of the air received from the core inlet 44. The rotation of the LPT rotor 52 also drives rotation of the fan rotor 48 through the drivetrain 62 and its geartrain 64. The rotation of the fan rotor 48 propels the bypass air through and out of the bypass flowpath 70. The propulsion of the bypass air may account for a majority of forward thrust generated by the aircraft propulsion system 20 and its turbine engine 28 of FIG. 1.

While the turbine engine 28 is described above with a particular two rotating structure (e.g., two spool) arrangement, the present disclosure is not limited thereto. For example, the LPC rotor 49 may be omitted to configure the LPT rotor 52 as a power turbine (PT) rotor for the fan rotor 48. The turbine engine 28 may also or alternatively include another rotating structure; e.g., an intermediate speed spool for the engine core 40.

The propulsion system housing 30 of FIG. 1 includes the inner housing structure 72, the outer housing structure 74 and a guide vane structure 80. This propulsion system housing 30 may also include at least (or only) one bifurcation structure 82.

The inner housing structure 72 is configured to house the engine core 40 and at least partially form the inlet section 33 and the exhaust section 37. The inner housing structure 72 is also configured to form an inner peripheral boundary 84 of the bypass flowpath 70 along a radial outer side of the inner housing structure 72. The inner housing structure 72 of FIG. 1, for example, includes an inner case 86 (e.g., a core case) for the turbine engine 28. This inner housing structure 72 also includes the splitter structure 68, a radial inner platform 88 for the guide vane structure 80, an inner flowpath wall 90 (e.g., an aft, inner diameter (ID) panel), a bulkhead 92 (e.g., a firewall) and an inner nacelle structure 94 (e.g., an inner fixed structure (IFS)). Briefly, the inner nacelle structure 94 of FIG. 1 includes one or more inner barrel cowls 96 arranged circumferentially about the propulsion system axis 22; e.g., a pair of inner barrel cowls.

The inner case 86 is disposed radially outboard of the engine sections 34A-36B and the engine rotors 49-52. The inner case 86 extends axially along (e.g., axially overlaps) and extends circumferentially about (e.g., circumscribes) the engine sections 34A-36B and the engine rotors 49-52. The inner case 86 may thereby house and provide a support structure for the engine sections 34A-36B and the engine rotors 49-52.

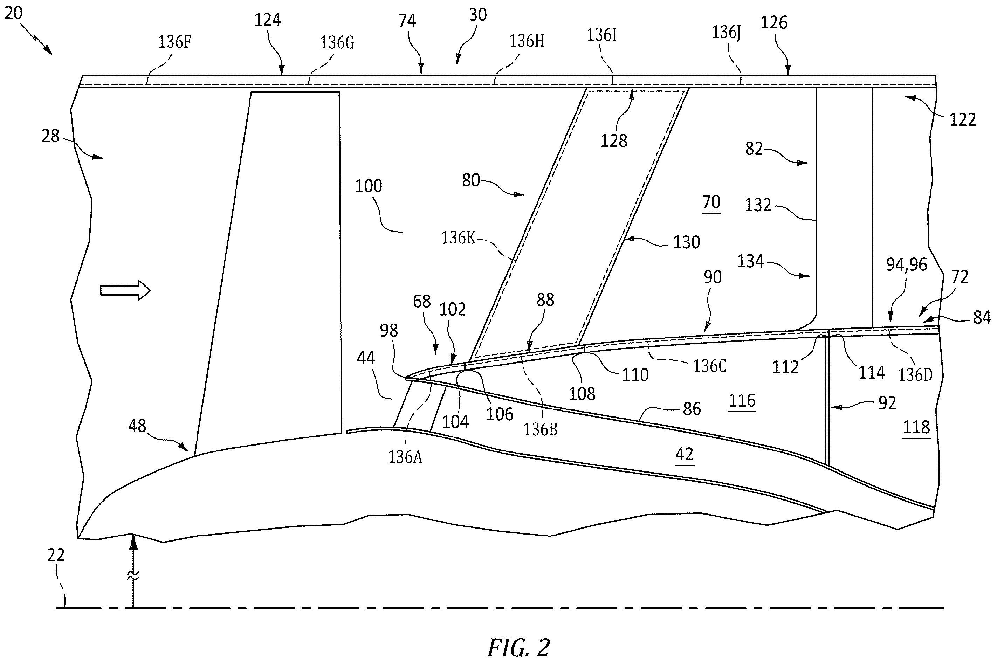

Referring to FIG. 2, the splitter structure 68 is configured to split the air propelled by the fan rotor 48 into the inner air stream and the outer air stream as described above. The splitter structure 68, for example, may be configured as an annular eagle beak structure. An axial forward, leading edge 98 of the splitter structure 68 is disposed radially between the core flowpath 42 and the bypass flowpath 70. More particularly, the splitter structure leading edge 98 forms a radial outer peripheral boundary of the core inlet 44. The splitter structure leading edge 98 also forms a radial inner peripheral boundary of an airflow inlet 100 (e.g., an annular inlet) into the bypass flowpath 70. An outer wall 102 of the splitter structure 68 may extend axially along the propulsion system axis 22 from the splitter structure leading edge 98 to (or about) the guide vane structure 80 and/or an axial forward, upstream end 104 of the inner platform 88. The splitter structure 68 and its splitter structure outer wall 102 may thereby be disposed axially next to (e.g., adjacent) the inner platform 88 along the inner peripheral boundary 84 of the bypass flowpath 70. The splitter structure outer wall 102 is also disposed radially outboard of the inner case 86. The splitter structure outer wall 102 extends axially along (e.g., axially overlaps) and extends circumferentially about (e.g., circumscribes) the inner case 86 and the propulsion system axis 22.

The inner platform 88 is disposed radially outboard of the inner case 86. The inner platform 88 extends axially along (e.g., axially overlaps) and extends circumferentially about (e.g., circumscribes) the inner case 86 and the propulsion system axis 22. The inner platform 88 is disposed axially between (a) the splitter structure 68 and its splitter structure outer wall 102 and (b) the flowpath wall 90. The inner platform 88 of FIG. 2, for example, extends axially along the propulsion system axis 22 from an axial aft, downstream end 106 of the splitter structure outer wall 102 to an axial forward, upstream end 108 of the flowpath wall 90. The inner platform 88 may thereby be disposed axially next to (e.g., adjacent) and between (a) the splitter structure 68 and its splitter structure outer wall 102 and (b) the flowpath wall 90 along the inner peripheral boundary 84 of the bypass flowpath 70.

The flowpath wall 90 is disposed radially outboard of the inner case 86. The flowpath wall 90 extends axially along (e.g., axially overlaps) and extends circumferentially about (e.g., circumscribes) the inner case 86 and the propulsion system axis 22. The flowpath wall 90 is disposed axially between (a) the inner platform 88 and (b) the inner nacelle structure 94 and its inner barrel cowls 96. The flowpath wall 90 of FIG. 2, for example, extends axially along the propulsion system axis 22 from an axial aft, downstream end 110 of the inner platform 88 to an axial forward, upstream end 112 of each inner barrel cowl 96. The flowpath wall 90 may thereby be disposed axially next to (e.g., adjacent) and between (a) the inner platform 88 and (b) the inner nacelle structure 94 and its inner barrel cowls 96 along the inner peripheral boundary 84 of the bypass flowpath 70.

The bulkhead 92 projects radially out from the inner case 86 to the flowpath wall 90. The bulkhead 92 is also mechanically fastened and/or otherwise attached to the inner case 86 and the flowpath wall 90. In FIG. 2, the bulkhead 92 is attached to the flowpath wall 90 at (or about) an axial aft, downstream end 114 of the flowpath wall 90. The bulkhead 92 extends circumferentially about (e.g., completely around) the inner case 86 and the propulsion system axis 22. The bulkhead 92 of FIG. 2 is configured as a firewall dividing a forward inner compartment 116 of the inner housing structure 72 from an aft inner compartment 118 of the inner housing structure 72. Briefly, the forward inner compartment 116 is disposed and extends radially between the inner case 86 and the inner housing structure members 88 and 102. The aft inner compartment 118 is disposed and extends radially between the inner case 86 and the inner nacelle structure 94 and each of its inner barrel cowls 96.

The inner nacelle structure 94 is configured to provide a non-structural, aerodynamic cover over the engine core 40 and its inner case 86, axially aft and downstream of the flowpath wall 90. The inner nacelle structure 94 and its inner barrel cowls 96 are disposed radially outboard of the inner case 86. The inner nacelle structure 94 and its inner barrel cowls 96 extend axially along (e.g., axially overlaps) and extend circumferentially about (e.g., circumscribes) the inner case 86 and the propulsion system axis 22. The inner nacelle structure 94 and its inner barrel cowls 96 are disposed axially next to (e.g., adjacent) the inner housing structure members 90 and 92. The inner nacelle structure 94 and its inner barrel cowls 96 of FIG. 2, for example, extend axially along the propulsion system axis 22 to the downstream end 114 of the flowpath wall 90. The inner nacelle structure 94 and its inner barrel cowls 96 may thereby be disposed axially next to the flowpath wall 90 along the inner peripheral boundary 84 of the bypass flowpath 70.

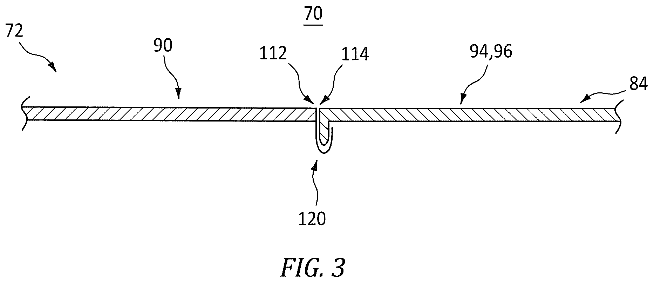

Referring to FIG. 3, each inner barrel cowl 96 may interface with the flowpath wall 90 at a mechanical joint 120. This mechanical joint 120 may be configured as a V-groove coupling or another type of coupling to axially link a position of the respective inner barrel cowl 96 to the flowpath wall 90. The mechanical joint 120 may also be configured to minimize steps and gaps along the inner peripheral boundary 84 of the bypass flowpath 70 at the interface between the respective inner barrel cowl 96 and the flowpath wall 90.

Referring to FIG. 1, the outer housing structure 74 is configured to house the fan section 32 and its fan rotor 48. The outer housing structure 74 is also configured to form an outer peripheral boundary 122 of the bypass flowpath 70 along a radial inner side of the outer housing structure 74. The outer housing structure 74 of FIG. 1, for example, includes an outer case 124 (e.g., a fan case) and an outer nacelle structure 126.

The outer case 124 is disposed radially outboard of the fan section 32 and the inner housing structure 72. More particularly, the outer case 124 is disposed radially outboard of and next to the fan rotor 48. The outer case 124 extends axially along (e.g., axially overlaps) and extends circumferentially about (e.g., circumscribes) the fan section 32 and its fan rotor 48. The outer case 124 may thereby house and provide a containment structure for the fan section 32 and its fan rotor 48. The outer case 124 of FIG. 1 also extends axially along (e.g., axially overlaps) and extends circumferentially about (e.g., circumscribes) the inner housing structure 72 and one or more of its members 68, 88, 90 and 94. Here, the outer case 124 also forms a radial outer platform 128 for the guide vane structure 80.

The outer nacelle structure 126 is configured to provide a non-structural, aerodynamic cover over the outer case 124. The outer nacelle structure 126 is disposed radially outboard of the outer case 124. The outer nacelle structure 126 extends axially along (e.g., axially overlaps) and extends circumferentially about (e.g., circumscribes) the outer case 124 and the propulsion system axis 22. An aft, downstream portion of the outer nacelle structure 126 is also configured to form the outer peripheral boundary 122 of the bypass flowpath 70 with the outer case 124.

The guide vane structure 80 is configured to condition (e.g., straighten out, deswirl, etc.) the flow of the bypass air propelled by the fan rotor 48 through the bypass flowpath 70 to enhance the forward thrust. Referring to FIG. 2, the guide vane structure 80 includes a plurality of guide vanes 130; e.g., fan exit guide vanes. The guide vane structure 80 also includes the inner platform 88 and a tubular section of the outer case 124 forming the outer platform 128. The guide vanes 130 are arranged and may (or may not) be equispaced circumferentially about the inner platform 88 and the propulsion system axis 22 in an annular array; e.g., a circular array. Each of the guide vanes 130 projects spanwise from the inner platform 88, radially across the bypass flowpath 70, to the outer case 124 and its outer platform 128. Each of the guide vanes 130 may also be canted relative to the inner peripheral boundary 84 of the bypass flowpath 70 and/or the propulsion system axis 22. Each guide vane 130 of FIG. 2, for example, projects axially over a forward, upstream portion of the flowpath wall 90 as that guide vane 130 extends radially towards (e.g., to) the outer case 124 and its outer platform 128.

The bifurcation structure 82 is configured to circumferentially bifurcate (e.g., divide) a longitudinal section of the bypass flowpath 70. The bifurcation structure 82 may also provide an aerodynamic cover over a pylon structure (not shown) mounting the aircraft propulsion system 20 and its turbine engine 28 to an airframe of the aircraft. The bifurcation structure 82 of FIG. 2 is connected to and projects radially across the bypass flowpath 70 between the inner housing structure 72 and the outer housing structure 74. The bifurcation structure 82 extends axially along the inner housing structure 72 and the outer housing structure 74 to an axial forward, upstream leading edge 132 of the bifurcation structure 82. This bifurcation structure leading edge 132 may be formed by a nose structure 134 of the bifurcation structure 82. The nose structure 134 of FIG. 2 axially overlaps and may be connected to an axial aft, downstream portion of the flowpath wall 90.

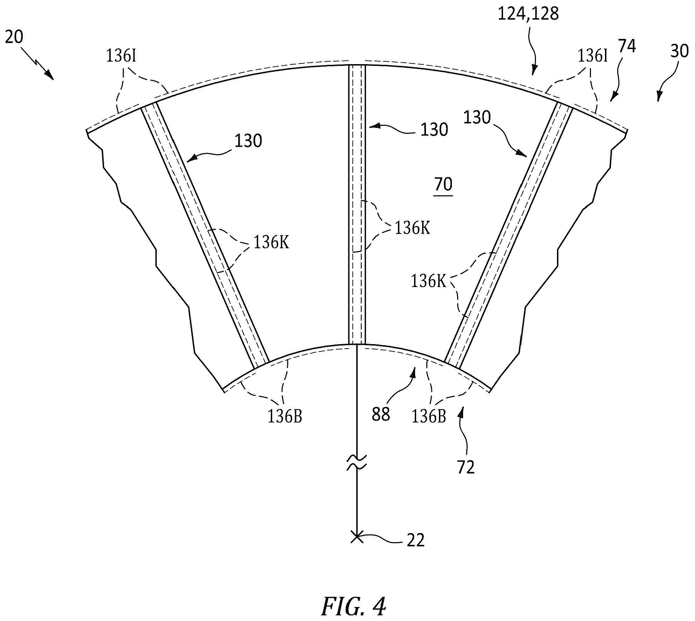

During aircraft propulsion system operation and during aircraft flight, various members of the aircraft propulsion system 20 may generate sound; e.g., noise. The sound may be actively generated by one or more propulsion system members. For example, the above-described operation of the turbine engine 28 and rotation of its fan rotor 48 may collectively generate a relatively large portion of the sound. The sound may also be passively generated by one or more other propulsion system members. For example, impingement of air against and/or the flow of the air along the inner housing structure 72 and the guide vane structure 80 may also generate a smaller portion of the sound. To reduce, suppress, eliminate and/or otherwise attenuate one or more frequencies of sound waves generated during the aircraft propulsion system operation and the aircraft flight, one or more components of the aircraft propulsion system 20 may be configured with acoustic treatment 136A-L (generally referred to as "136"). These acoustically treated aircraft propulsion system components may include any one or more of the following:
▪ the splitter structure 68 and its splitter structure outer wall 102;
▪ the inner platform 88 and, more particularly, circumferential segments of the inner platform 88 between each circumferentially neighboring (e.g., adjacent) pair of the guide vanes 130 (see FIG. 4);
▪ the flowpath wall 90;
▪ the inner nacelle structure 94 and its inner barrel cowls 96;
▪ an inlet structure 138 (e.g., a nose lip and/or an inner barrel) of the outer nacelle structure 126;
▪ a section of the outer case 124 axially forward, upstream of the fan rotor 48;
▪ a section of the outer case 124 axially aligned with and overlapping the fan rotor 48;
▪ a section of the outer case 124 axially aft, downstream of the fan rotor 48 and axially forward, upstream of the guide vane structure 80;
▪ the outer platform 128 and, more particularly, circumferential segments of the outer platform 128 between each circumferentially neighboring pair of the guide vanes 130 (see FIG. 4);
▪ an aft structure 140 (e.g., a translating sleeve for a thrust reverser) of the outer nacelle structure 126;
▪ one or more of the guide vanes 130; and/or
▪ an outer wall 142 of a center body (e.g., an exhaust cone) at the propulsion system aft end 26, which center body outer wall 142 may form a radial inner peripheral boundary of the core exhaust 46.

The present disclosure, however, is not limited to the foregoing exemplary acoustically treated aircraft propulsion system components. Various other components of the aircraft propulsion system 20 may also or alternatively be configured with the acoustic treatment 136.

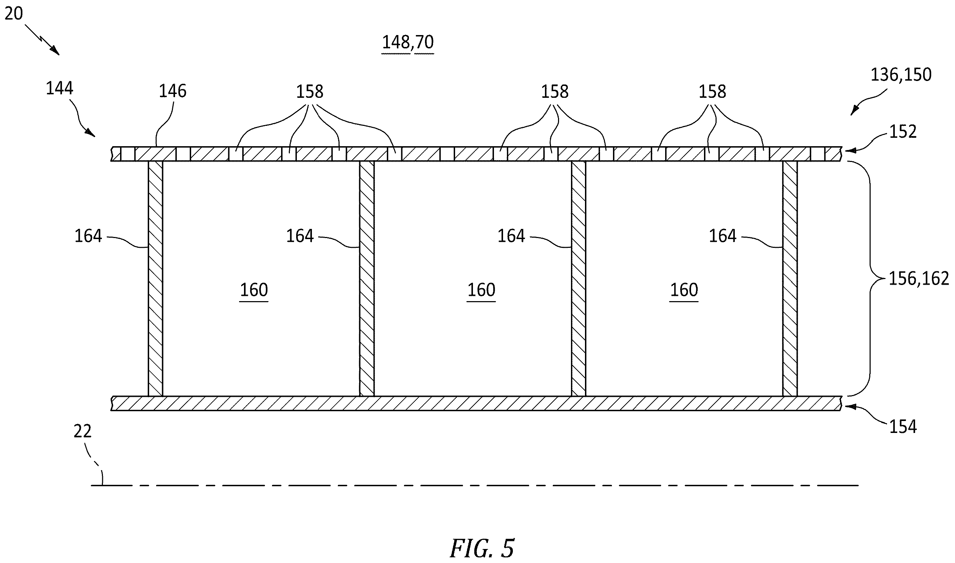

FIG. 5 illustrates a portion of an exemplary aircraft propulsion system component 144 configured with the acoustic treatment 136, which aircraft propulsion system component 144 may be any one of the acoustically treated aircraft propulsion system components described herein. The acoustic treatment 136 extends along a surface 146 of the aircraft propulsion system component 144 that is exposed to air (e.g., the bypass air) within an internal volume 148 (e.g., the bypass flowpath 70) through which the sound to be attenuated propagates. The acoustic treatment 136 may be integrated with the aircraft propulsion system component 144. The acoustic treatment 136, for example, may be included as a part of the aircraft propulsion system component 144. Alternatively, the aircraft propulsion system component 144 may be included as a part of (e.g., configured as a skin of) the acoustic treatment 136.

The acoustic treatment 136 is configured to reduce, suppress, eliminate and/or otherwise attenuate one or more frequencies of the sound waves propagating through the internal volume 148 along the component surface 146. The acoustic treatment 136 of FIG. 5, for example, is configured as a cellular acoustic structure 150; e.g., an acoustic panel. This acoustic structure 150 of FIG. 5 includes a fluid permeable (e.g., perforated) face skin 152, a fluid impermeable (e.g., non-perforated) back skin 154 and a cellular core 156.

The face skin 152 is configured as an exterior skin of the aircraft propulsion system component 144 which forms the component surface 146 and borders the internal volume 148. The face skin 152 includes a plurality of perforations 158; e.g., apertures such as through-holes. Each of these face skin perforations 158 extends laterally through a thickness of the face skin 152.

The back skin 154 may be configured as a continuous, uninterrupted and/or nonporous skin. The back skin 154 of FIG. 5, for example, is configured without any perforations at least aligned with the cellular core 156.

The cellular core 156 is arranged laterally between the face skin 152 and the back skin 154. The cellular core 156 of FIG. 5, for example, extends laterally from an interior side of the face skin 152 to an interior side of the back skin 154. The cellular core 156 may also be connected to (e.g., formed integral with or attached to) the face skin 152 and/or the back skin 154.

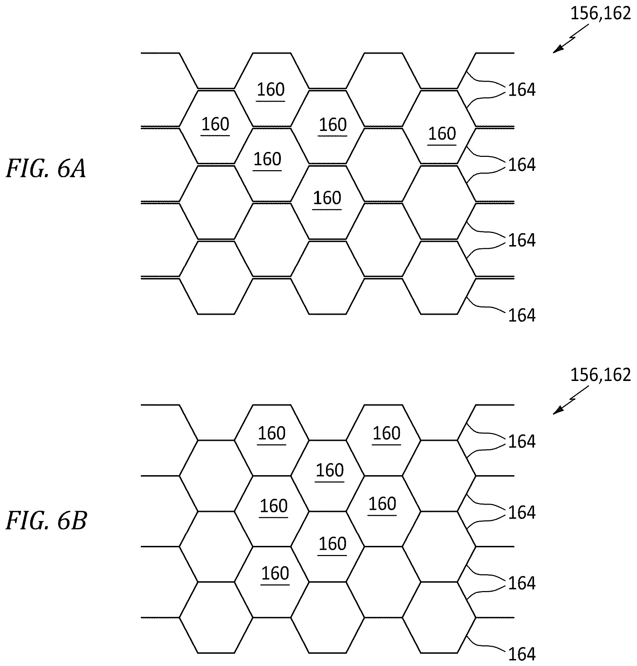

The cellular core 156 forms one or more internal chambers 160 (e.g., acoustic resonance chambers, cavities, etc.) laterally between the face skin 152 and the back skin 154. The cellular core 156 of FIG. 6A, for example, includes a cellular core structure 162 with a plurality of corrugated sidewalls 164. These corrugated sidewalls 164 are arranged in a sideby-side array and are connected to one another such that each neighboring pair of the corrugated sidewalls 164 forms an array of the internal chambers 160 (e.g., spanwise and/or longitudinally) therebetween. While the corrugated sidewalls 164 may be discrete elements, some or all of the corrugated sidewalls 164 may alternatively be formed integral with one another as shown in FIG. 6B. Such an integral sidewall structure may be formed using machining, additive manufacturing and/or other manufacturing processes.

Each of the internal chambers 160 of FIG. 5 extends laterally within / through the cellular core 156 between and to the face skin 152 and the back skin 154. One or more of all of the internal chambers 160 may thereby each be fluidly coupled with a respective set of one or more of the face skin perforations 158.

Each of the internal chambers 160 has a first chamber sectional geometry (e.g., shape, size, etc.) when viewed in a first reference plane; e.g., the plane of FIG. 5. This first chamber sectional geometry may have a polygonal shape; e.g., a rectangular shape. Referring to FIGS. 6A and 6B, each of the internal chambers 160 has a second chamber sectional geometry (e.g., shape, size, etc.) when viewed in a second reference plane; e.g., the plane of FIG. 6A, 6B. This second chamber sectional geometry may have a polygonal shape; e.g., a hexagonal shape. With such a configuration, the cellular core structure 162 may be a honeycomb core. The present disclosure, however, is not limited to foregoing exemplary cellular core configuration. For example, one or more or all of the internal chambers 160 may each alternatively have a circular, elliptical or other non-polygonal cross-sectional geometry. Furthermore, various other types of honeycomb cores and, more generally, various other types of cellular cores for acoustic structures are known in the art, and the present disclosure is not limited to any particular ones thereof.

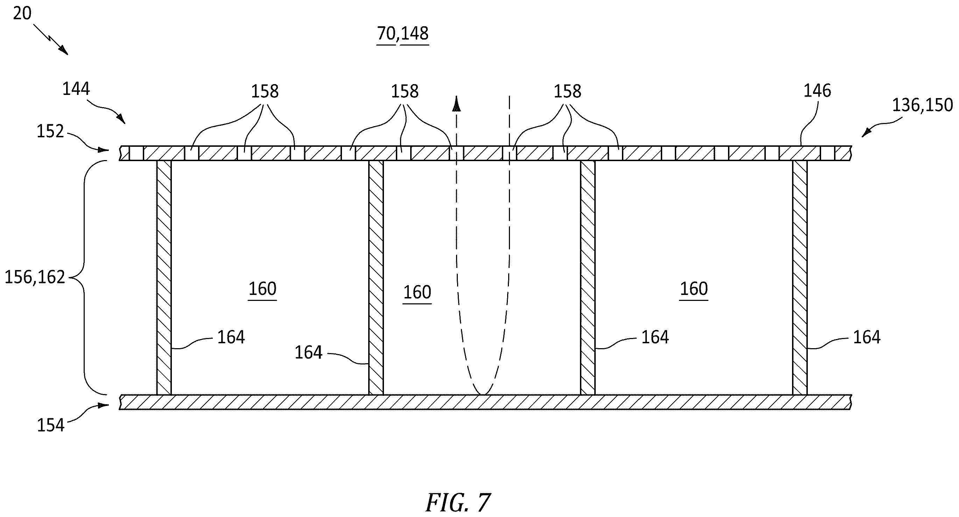

Referring to FIG. 7, the acoustic structure 150 may be configured as a single-degree of freedom (SDOF) acoustic structure. Sound waves propagating within the internal volume 148, for example, may enter the aircraft propulsion system component 144 and its associated acoustic structure 150 through the face skin perforations 158. Within the acoustic structure 150, the sound waves may travel through a respective one of the internal chambers 160 and reflect against, for example, the back skin 154. These reflected sound waves may travel back through the respective internal chamber 160 and exit the aircraft propulsion system component 144 and its associated acoustic structure 150 through the respective face skin perforation(s) 158, where those reflected sound waves may be out of phase from and destructively interfere with incoming sound waves. Of course, the sound waves may also or alternatively reflect against one or more other elements of the acoustic structure 150 which may further influence sound attenuation.

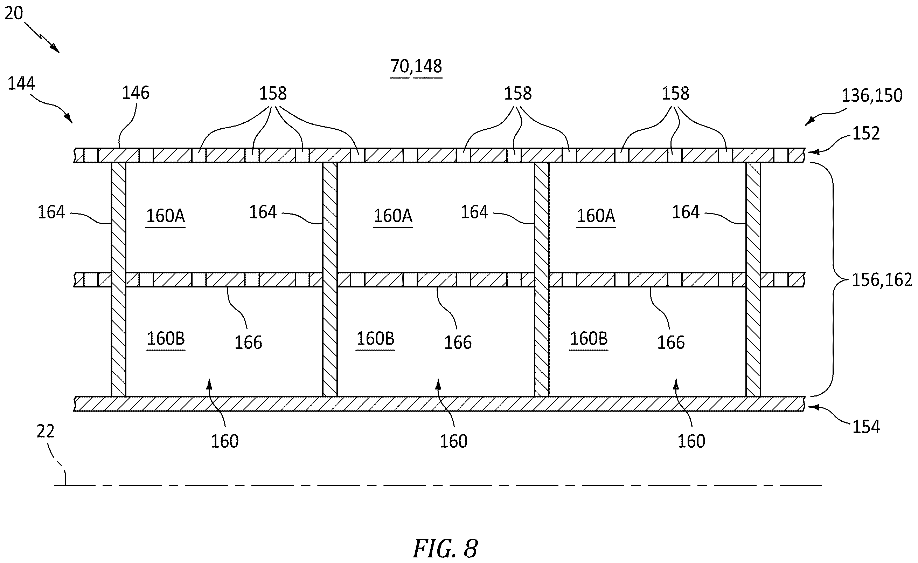

While the acoustic structure 150 is described above as a single-degree of freedom (SDOF) acoustic structure, the present disclosure is not limited thereto. For example, referring to FIG. 8, the acoustic structure 150 may alternatively be configured as a multi-degree of freedom (MDOF) acoustic structure; e.g., a double-degree of freedom (DDOF) acoustic structure. One or more or all of the internal chambers 160 of FIG. 8, for example, may each be provided with at least one fluid-permeable (e.g., perforated) septum 166 to divide that respective internal chamber 160 into a set of fluidly coupled sub-chambers 160A and 160B. Moreover, while each internal chamber 160 or sub-chamber 160A, 160B is shown in FIGS. 5, 7 and 8 as an open space (e.g., a volume unoccupied by another element), it is contemplated one or more of the internal chambers 160 or sub-chamber 160A, 160B may alternatively be partially or completely filled with a porous material such as foam and/or felt.

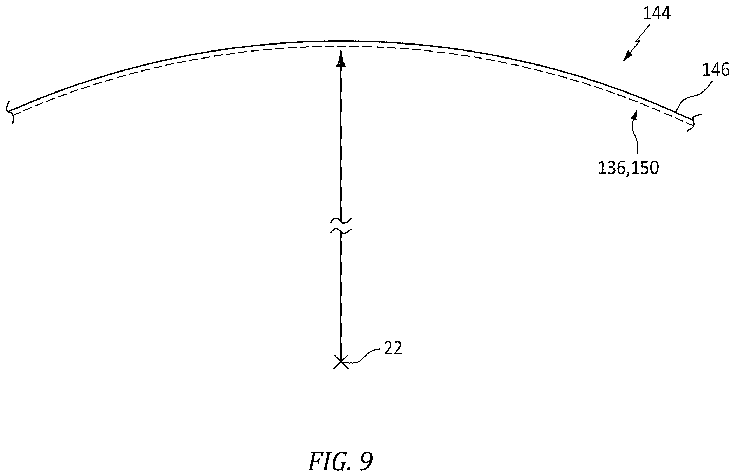

Referring to FIG. 5, where the aircraft propulsion system component 144 is configured as one of the acoustically treated aircraft propulsion system components (e.g., 68, 88, 90, 94, 96, 102, 124, 126, 130, 138, 140 and/or 142) of FIG. 1, the acoustic structure 150 / the acoustic treatment 136 may extend axially along the propulsion system axis 22 and the component surface 146 thereby partially or completely covering an axial extent of the aircraft propulsion system component 144 and its component surface 146. Referring to FIG. 9, where the aircraft propulsion system component 144 is configured as one of the acoustically treated aircraft propulsion system components (e.g., 68, 88, 90, 94, 96, 102, 124, 126, 138, 140 and/or 142) of FIG. 1, the acoustic structure 150 / the acoustic treatment 136 may extend circumferentially about (e.g., partially or completely around) the propulsion system axis 22 and along the component surface 146 thereby partially or completely covering a circumferential extent of the aircraft propulsion system component 144 and its component surface 146. Where the aircraft propulsion system component 144 is configured as one of the acoustically treated aircraft propulsion system components (e.g., 130) of FIG. 1, the acoustic structure 150 / the acoustic treatment 136 (see FIG. 5) may extend radial along the component surface 146 (see FIG. 5) thereby partially or completely covering a radial extent of the aircraft propulsion system component 144 and its component surface 146.

While various embodiments of the present disclosure have been described, it will be apparent to those of ordinary skill in the art that many more embodiments and implementations are possible within the scope of the disclosure. For example, the present disclosure as described herein includes several aspects and embodiments that include particular features. Although these features may be described individually, it is within the scope of the present disclosure that some or all of these features may be combined with any one of the aspects and remain within the scope of the disclosure. Accordingly, the present disclosure is not to be restricted except in light of the attached claims and their equivalents.

## Claims

1. An apparatus for an aircraft propulsion system (20), comprising:
an inner housing structure (72) extending axially along and circumferentially about an axis (22), a radial outer side of the inner housing structure (72) forming an inner peripheral boundary (84) of a flowpath (70), and the inner housing structure (72) including an inner case (86), an inner platform (88) of a guide vane structure (80), a flowpath wall (90) and a bulkhead (92);
the flowpath wall (90) axially adjacent the inner platform (88) along the inner peripheral boundary (84) of the flowpath (70), the flowpath wall (90) spaced radially outboard from the inner case (86), and the flowpath wall (90) configured with a flowpath wall acoustic treatment (136C) extending along the inner peripheral boundary (84) of the flowpath (70); and
the bulkhead (92) extending radially between and connected to the inner case (86) and the flowpath wall (90).

2. The apparatus of claim 1, further comprising:
an outer housing structure (74) spaced radially outboard from, extending axially along and extending circumferentially about the inner housing structure (72), a radial inner side of the outer housing structure (74) forming an outer peripheral boundary (122) of the flowpath (70), and the outer housing structure (74) including an outer case (124); and
a plurality of vanes (130) of the guide vane structure (80) arranged circumferentially about the axis (22) in an array, each of the plurality of vanes (130) projecting radially across the flowpath (70) from the inner platform (88) to the outer case (124).

3. The apparatus of claim 2, wherein the plurality of vanes comprises a first vane (130), and the first vane (130) is canted and projects axially over the flowpath wall acoustic treatment (136C) as the first vane (130) extends radially outward towards the outer case (124).

4. The apparatus of claim 2 or 3, wherein the plurality of vanes comprises a/the first vane (130), and the first vane (130) is configured with a vane acoustic treatment (136K) extending at least partially radially along the first vane (130).

5. The apparatus of claim 2, 3 or 4, wherein the inner platform (88) is configured with an inner platform acoustic treatment (136B) extending along the inner peripheral boundary (84) of the flowpath (70), and optionally at least a portion of the inner platform acoustic treatment (136B) is disposed between a circumferentially neighboring pair of the plurality of vanes (130).

6. The apparatus of any of claims 2 to 5, further comprising:
a fan rotor (48); and
an engine core (40) configured to drive rotation of the fan rotor (48);
the inner housing structure (72) housing the engine core (40), the outer case (124) radially next to and circumscribing the fan rotor (48), and the plurality of vanes (130) downstream of the fan rotor (48).

7. The apparatus of any preceding claim, wherein
the inner housing structure (72) further includes an inner nacelle structure (94); and
the flowpath wall (90) extends axially between a downstream end (110) of the inner platform (88) and an upstream end (112) of a cowl (96) of the inner nacelle structure (94).

8. The apparatus of claim 7, wherein the cowl (96) of the inner nacelle structure (94) interfaces with the flowpath wall (90) at a v-groove coupling.

9. The apparatus of claim 7 or 8, wherein the cowl (96) of the inner nacelle structure (94) is configured with a cowl acoustic treatment (136D) extending along the inner peripheral boundary (84) of the flowpath (70).

10. The apparatus of any preceding claim, wherein
the inner housing structure (72) further includes a splitter structure (68);
an outer wall (102) of the splitter structure (68) extends axially from a leading edge (98) of the splitter structure (68) to an upstream end (104) of the inner platform (88).

11. The apparatus of claim 10, wherein the outer wall (102) of the splitter structure (68) is configured with a splitter structure acoustic treatment (136A) extending along the inner peripheral boundary (84) of the flowpath (70).

12. The apparatus of any preceding claim, further comprising:
a bifurcation structure (82) projecting radially out from the inner housing structure (72) across the flowpath (70);
the bifurcation structure (82) comprising a nose structure (134) forming a leading edge (132) of the bifurcation structure (82); and
the nose structure (134) connected to and axially overlapping a downstream end portion of the flowpath wall (90).

13. The apparatus of any preceding claim, wherein the bulkhead (92) comprises a firewall.

14. The apparatus of any preceding claim, wherein the flowpath wall acoustic treatment (136) comprises an acoustic panel (150) with a cellular core (156).

15. The apparatus of any preceding claim, wherein the flowpath wall acoustic treatment (136C) comprises a single degree-of-freedom acoustic treatment, or a multi degree-of-freedom acoustic treatment.
